# EUROPÄISCHE PATENTSCHRIFT

(11) **EP 3 036 080 B1**
(45) Veröffentlichungstag und Bekanntmachung des Hinweises auf die Patenterteilung: **13.05.2020**
(21) Anmeldenummer: 14750696.8
(22) Anmeldetag: 12.08.2014
(51) Int. Cl.: B29C 49/42, B29C 49/68, B29C 49/46, B29C 49/06

(54) **VORRICHTUNG UND VERFAHREN ZUR HERSTELLUNG STERILER BEHÄLTER**
DEVICE AND METHOD FOR PRODUCING STERILE CONTAINERS
DISPOSITIF ET PROCÉDÉ PERMETTANT DE PRODUIRE DES CONTENANTS STÉRILES

(30) Priorität: 19.08.2013 DE 102013013592
(43) Veröffentlichungstag der Anmeldung: 29.06.2016
(73) Patentinhaber: KHS Corpoplast GmbH, 22145 Hamburg (DE)
(72) Erfinder: LEWIN, Frank, 22889 Tangstedt (DE); HEROLD, Thomas, 23863 Bargfeld-Stegen (DE); MEYER, Jan Fabian, 22337 Hamburg (DE); GERHARDS, Martin, 22089 Hamburg (DE); KLATT, Dieter, 22147 Hamburg (DE); BAUMGARTE, Rolf, 22926 Ahrensburg (DE)
(74) Vertreter: Hausfeld, Norbert
(86) Internationale Anmeldenummer: PCT/EP2014/002206
(87) Internationale Veröffentlichungsnummer: WO 2015/024637

(56) Entgegenhaltungen:
- EP-A1- 2 604 410
- EP-A2- 2 138 298
- WO-A1-2011/154294
- US-A1- 2005 118 057
- US-A1- 2009 317 506

## Beschreibung

Die Erfindung betrifft ein Verfahren zur Herstellung von blasgeformten, mindestens bereichsweise sterilen Behältern in einer Blasmaschine, bei dem ein Vorformling aus einem thermoplastischen Material zunächst mittels einer Trageinrichtung durch eine Heizeinrichtung geführt und in der Heizeinrichtung erwärmt wird, und dann mit einem unter Druck stehenden Fluid beaufschlagt wird, sowie bei dem der Vorformling zumindest bereichsweise mit einer sterilisierenden Strahlung beaufschlagt wird.

Darüber hinaus betrifft die Erfindung eine Blasmaschine zur Herstellung von blasgeformten, mindestens bereichsweise sterilen Behältern, die eine Sterilisierungseinrichtung mit wenigstens einer Strahlungsquelle zur Beaufschlagung mindestens eines Teiles eines Vorformlings mit einer sterilisierenden Strahlung aufweist, sowie die mit einer Heizeinrichtung zur Temperierung der Vorformlinge auf eine Blasformungstemperatur und mit einer Blaseinrichtung zur Blasverformung der Vorformlinge in die Behälter versehen ist, wobei Trageinrichtungen die Vorformlinge durch die Heizeinrichtung führen. Weitere Aspekte der Erfindung betreffen eine Heizeinrichtung und einen Heizkasten.

Eine Herstellung von sterilen, blasgeformten Behältern erfolgt typischerweise derart, dass diese Behälter nach ihrer Blasformung und vor einer Befüllung unter Verwendung von Wasserstoffperoxid oder von anderen Chemikalien sterilisiert werden. Ebenfalls ist es bereits bekannt, die bei der Blasformung der Behälter als Ausgangsprodukt verwendeten Vorformlinge mittels Strahlung zu sterilisieren, insbesondere den Bereich der inneren und der äußeren Oberfläche dieser Vorformlinge.

Bei einer Behälterformung durch Blasdruckeinwirkung werden Vorformlinge aus einem thermoplastischen Material, beispielsweise Vorformlinge aus PET (Polyethylenterephtalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert.

Der grundsätzliche Aufbau einer Blasstation zur Behälterformung wird in der DE-OS 42 12 583 beschrieben. Möglichkeiten zur Temperierung der Vorformlinge werden in der DE - OS 23 52 926 erläutert.

Innerhalb der Blasmaschine können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Hinsichtlich der Sterilisierung von Vorformlingen sind aus dem Stand der Technik bereits unterschiedliche Verfahren und Vorrichtungen bekannt, die jedoch alle verfahrensspezifische Nachteile aufweisen, die einer zuverlässigen Sterilisierung der Vorformlinge bei gleichzeitig hohen Durchsatzraten entgegenstehen.

In der EP-A 1 086 019 wird beispielsweise die Sterilisierung von heißen Vorformlingen mit einem heißen gasförmigen Sterilisationsmittel beschrieben. Es werden hintereinander angeordnete separate Behandlungsstationen verwendet, nämlich ein erstes Heizmodul, ein Sterilisiermodul sowie ein zweites Heizmodul. Nachteilig ist hierbei das Temperaturverhalten des Vorformlings während des Sterilisiervorganges sowie das unkontrollierte Austreten des Sterilisationsmittels aus dem Vorformling innerhalb der Heizung. Es besteht weiterhin die Möglichkeit einer Neuverkeimung, z.B. bereits im zweiten Heizmodul.

In der EP-A 1 896 245 wird ein Verfahren beschrieben, bei dem vor der Heizung ein gasförmiges Sterilisationsmittel in einen kalten Vorformling eingeleitet wird und hier kondensiert. Problematisch ist hier die Sicherstellung einer vollständigen Kondensatbildung auf der gesamten Innenfläche des Vorformlings, da das einströmende heiße Sterilisationsmittel die Innenwandtemperatur des Vorformlings erhöht. Darüber hinaus tritt auch hier das Sterilisationsmittel nach seiner Verdampfung im Bereich der Heizung unkontrolliert innerhalb der Heizung aus dem Vorformling aus. Die Neuverkeimung in der Heizung ist ebenfalls weiter gegeben.

In der WO 2010/020530 A1 wird die Anordnung einer Sterilisiereinrichtung zwischen einer Heizung und dem Blasmodul beschrieben. Bei diesem Verfahren ist die Eintragsmenge von Sterilisationsmittel in den Bereich des Blasmoduls nur schwer vorhersehbar. Darüber hinaus ist die Austrittsmenge an Sterilisationsmittel in die Umgebung nicht kontrollierbar und eine entsprechende Kontamination nicht ausgeschlossen.

Die Verwendung von UV-Strahlern für Sterilisieraufgaben ist allgemein z.B. aus der DE 295 03 830 U1 bekannt. Durch Bestrahlung mit UV-Licht soll ein von einem Schutzgehäuse eingeschlossener Raum entkeimt werden. Eine Entkeimung von Vorformlingen oder Behältern oder damit in Kontakt kommenden Elementen einer Blasmaschine offenbart diese Schrift nicht.

Die gattungsgemäße DE 10 2008 038 143 A1 offenbart, dass UV-Strahlungsemitter für die Sterilisierung der Außenwandung von Vorformlingen einsetzbar sind.

Die DE 10 2007 017 938 B4 offenbart die Verwendung von Strahlungsemittern für das Sterilisieren der inneren Oberflächen von Vorformlingen. Eine Sterilisierungssonde, die einen Strahlungsemitter trägt, wird zu diesem Zweck in den zu sterilisierenden Vorformling eingeführt. Einen vergleichbaren Stand der Technik zeigen auch die WO2010/012915 A1 und EP 2 138 298 A2, bei der ebenfalls für die Innensterilisierung eines Vorformlings eine Strahlungsquelle in die Mündung des Vorformlings eingeführt wird. In der letztgenannten Schrift wird angegeben, dass mehrere Sterilisiereinrichtungen vorzusehen sind, nämlich wenigstens eine vor der Einrichtung, in der die Vorformlinge zu Behältern umgeformt werden, und wenigstens eine danach. Es wird insbesondere bei letztgenanntem Stand der Technik als nachteilig angesehen, dass hoher apparativer Aufwand benötigt wird.

Es ist ein grundsätzliches Problem, das es nicht ausreichend ist, den Vorformling allein zu sterilisieren. Zur Vermeidung einer Neuverkeimung müssen auch zumindest diejenigen Elemente der Blasformmaschine steril gehalten werden, die nach der Vorformlingssterilisierung mit dem Vorformling in Kontakt kommen. Im Stand der Technik, z.B. in der EP 2 138 298 A2, wird diesem Problem dadurch begegnet, das ein die Blasformmaschine umgebendes Sterilgehäuse vorgesehen wird, das unter erheblichem Aufwand steril zu halten ist. Die gleiche Schrift schlägt zudem vor, einen zweiten Sterilisierungsschritt nach dem Blasformungsvorgang vorzunehmen. Auch dies bedeutet einen erheblichen konstruktiven und energetischen Mehraufwand.

US2009317506 offenbart ein Verfahren, eine Blasmaschine und eine Heizeinrichtung nach den Oberbegriffen der Ansprüche 1, 7 und 13.

US2005118057, EP2604410 und WO2011154294 offenbaren weitere Verfahren, Blasmaschinen und Heizeinrichtungen.

Es ist daher die Aufgabe der vorliegenden Erfindung, ein Verfahren anzugeben, mit dem in einfacher Weise eine ausreichende Sterilität der Vorformlinge gewährleistet werden kann. Eine weitere Aufgabe der vorliegenden Erfindung ist eine entsprechende Vorrichtung anzugeben, mit der das erfindungsgemäße Verfahren ausführbar ist.

Diese Aufgaben werden mit den Merkmalen der Ansprüchen 1, 7 und 13 gelöst.

Weitere vorteilhafte Ausgestaltungen sind in den Unteransprüchen angegeben.

Neuverkeimungsprobleme treten primär im Mündungsbereich des Vorformlings auf. Im für die Temperierung der Vorformlinge verwendeten Ofen ist Hauptquelle einer Neuverkeimung die den Vorformling tragende und durch den Ofen führende Trageinrichtung. Daher ist es vorteilhaft, sterilisierende Strahlung auf diesen Bereich zu richten.

Insbesondere die zuverlässige Sterilisierung der Trageinrichtung ist zur Vermeidung einer Neuverkeimung eminent wichtig. Bei einer Heizeinrichtung (Ofen), bei der um Umlenkräder ringförmig umlaufende Trageinrichtungen den Vorformling durch die Heizeinrichtung führen, und bei der Vorformlinge in einem Eingabebereich in die Heizeinrichtung übergeben und in einem Ausgabebereich aus der Heizeinrichtung entnommen werden, und bei der die umlaufenden Trageinrichtungen nach der Entnahme der Vorformlinge im Ausgabebereich vorformlingslos bis zum Eingabebereich um das Kopfrad herum weiterlaufen, ist es daher sehr vorteilhaft, wenigstens eine Strahlungsquelle im Bereich des Kopfrades anzuordnen und auf die vorformlingslosen Trageinrichtungen auszurichten. Die in diesem Bereich frei zugänglichen Trageinrichtungen, z.B. Transportdorne, können dadurch mit sterilisierender Strahlung beaufschlagt und keimfrei gemacht werden.

Heizeinrichtungen mit mehreren in Umlaufrichtung der Vorformlinge hintereinander angeordneten Heizkästen, wobei wenigstens eine der Strahlungsquellen innerhalb der Heizkästen und wenigstens eine der Strahlungsquellen zwischen benachbarten Heizkästen angeordnet sind, werden erfindungsgemäss vorgeschlagen. Auch dies trägt insbesondere aufgrund der gleichzeitigen Einwirkung von Sterilisier- und Heizstrahlung dazu bei, den Vorformling gegen Verkeimung zu schützen.

Mit Vorteil ist die Strahlungsquelle ein Linienstrahler, dessen Längsachse parallel zur Längserstreckung der vorbeibewegten Vorformlinge ausgerichtet ist. Unter einem Linienstrahler wird dabei ein Strahler verstanden, der in einer Richtung längserstreckt ist, z.B. röhrenförmig. Es ist dadurch ermöglich, den Vorformling über seine gesamte Längserstreckung mit Strahlung zu beaufschlagen. Dies wird auch erreicht, indem mehrere Strahlungsquellen in Richtung der Längserstreckung der vorbeibewegten Vorformlinge übereinander angeordnet sind. Die Strahlungsquellen sollten sich ergänzende Höhenbereiche des Vorformlings anstrahlen.

Die Sterilhaltung bzw. die Sterilisierung der Transporteinrichtungen lässt sich noch dadurch verbessern, dass wenigstens der Bereich der Heizeinrichtung, in dem die Trageinrichtungen vorformlingslos umlaufen, zumindest teilweise von einem mit einer Absaugung versehenen Gehäuse umschlossen ist, und die Trageinrichtungen innerhalb dieses Gehäuses mit einem chemischen Sterilisierungsmittel, insbesondere mit Wasserstoffperoxid, beaufschlagt werden.

Eine weitere Verbesserung ist dadurch erreichbar, dass bei Unterbrechungen des Blasformungsprozesses (Inline-Betrieb der Blasmaschine) oder beim Hochfahren der Blasmaschine die Strahlungsquellen weiterhin aktiv bleiben, um Verkeimungstendenzen entgegenzuwirken. Im Inline-Betrieb und beim Hochfahren der Blasmaschine laufen die Trageinrichtungen weiterhin um, aber ohne mit Vorformlingen bestückt zu werden. In diesem Zustand lassen sie sich sehr gut mit Strahlung beaufschlagen. Dies sollte mit Vorteil für wenigstens einen Umlauf der Trageinrichtungen in der Heizeinrichtung erfolgen, um zuverlässig jede Trageinrichtung zu bestrahlen bzw. in dem gehäuseumschlossenen Bereich mit dem chemischen Sterilisiermittel zu beaufschlagen.

Es ist auch von Vorteil, weitere Strahlungsquellen in der Heizeinrichtung anzuordnen, die auf den Bodenbereich und/oder auf die äußeren Seitenwände des Vorformlings gerichtet sind. Zwar sind diese Bereiche weniger kritisch für das später abzufüllende Füllgut. Dennoch ist auch hier eine Sterilisierung vorteilhaft.

Eine zuverlässigere und vollständige Bestrahlung der Vorformlinge ist möglich, indem mehrere Strahlungsquellen umfangsbeabstandet um den Vorformling herum angeordnet und aus verschiedenen radialen Richtungen auf den Vorformling ausgerichtet sind. Der Vorformling wird gewissermaßen umzingelt und aus mehreren Richtungen mit Strahlung beaufschlagt, mit besonderem Vorteil wird er vollumfänglich mit Strahlung beaufschlagt.

Dem gleichen Ziel dient, dass die Trageinrichtung sich beim Umlauf in der Heizeinrichtung zumindest bereichsweise um sich selbst dreht, wobei die Drehachse parallel zur Längserstreckung der Vorformlinge ausgerichtet ist.

Konstruktiv einfach lassen sich UV-Strahler verwenden. Geeignete UV-Strahler sind im Stand der Technik bekannt, z.B. UV-LED's, Amalgam-Niederdrucklampen, Quecksilberdampflampen (Niederdruck, Mitteldruck, Hochdruck und Höchstdruck), Excimer-Laser, Diodenlaser.

Es werden bevorzugt UV-Strahler als Strahlungsquellen angeordnet, die insbesondere in einem für die Sterilisierung geeigneten Wellenlängenbereich Strahlung emittieren, z.B. im Bereich von 180-300 nm, sei es schmal- oder breitbandig. Es wird als optimal angesehen, wenn die Strahlung intensitätsstark im Bereich um 220 nm und/oder 265 nm ist.

Die oben für erfindungsgemäße Verfahren geschilderten Vorteile gelten in analoger Weise für die erfindungsgemäßen Vorrichtungen. Insbesondere mit einer Heizeinrichtung und/oder Heizkästen, die mit Strahlungsquellen wie vorstehend beschrieben ausgestattet sind, lassen sich die genannten Vorteile erreichen.

Nachfolgend soll die Erfindung anhand von Ausführungsbeispielen näher erläutert werden. In den Zeichnungen sind Ausführungsbeispiele der Erfindung schematisch dargestellt. Es zeigen:
- Fig. 1: eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: in einer schematischen Schnittdarstellung einen Heizkasten mit darin angeordnetem Vorformling und mit mehreren Strahlungsquellen;
- Fig. 6: in einer prinzipienhaften Seitenansicht einen Teilbereich einer Heizstrecke einer Blasmaschine mit Strahlungsquellen;
- Fig. 7: in einer Ansicht von oben der in Fig. 6 dargestellte Teilbereich der Heizstrecke;
- Fig. 8: in einer prinzipienhaften Aufsicht den Ein- und Auslaufbereich einer erfindungsgemäßen Heizstrecke mit Strahlungsquellen; und
- Fig. 9: in einer prinzipienhaften Aufsicht analog zu Fig. 8 den Ein- und Auslaufbereich eines zweiten Ausführungsbeispiels einer erfindungsgemäßen Heizstrecke.

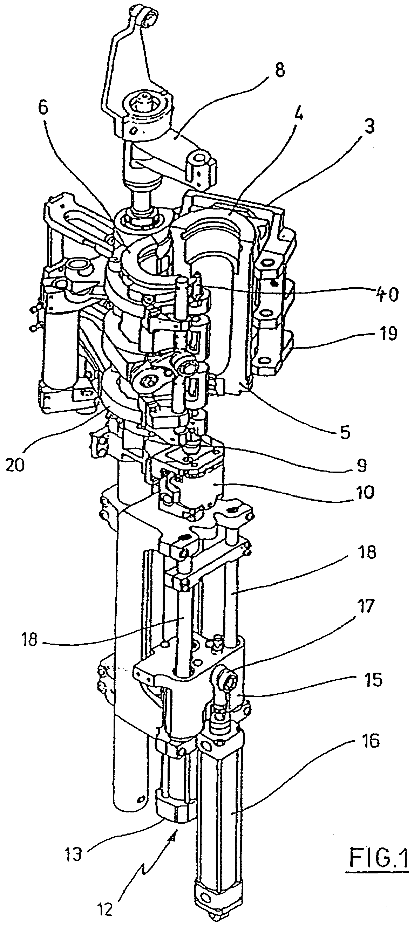

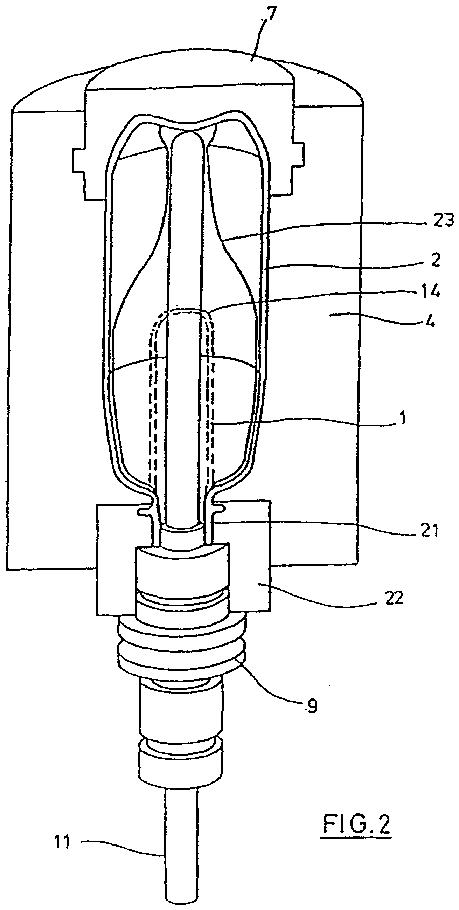

Der prinzipielle Aufbau einer Vorrichtung zur Umformung von Vorformlingen 1 in Behälter 2 ist in Fig. 1 und in Fig. 2 dargestellt.

Die Vorrichtung zur Formung des Behälters 2 (Blasmaschine) besteht im Wesentlichen aus einer Blasstation 3, die mit einer Blasform 4 versehen ist, in die ein Vorformling 1 einsetzbar ist. Der Vorformling 1 kann ein spritzgegossenes Teil aus Polyethylenterephthalat sein. Zur Ermöglichung eines Einsetzens des Vorformlings 1 in die Blasform 4 und zur Ermöglichung eines Herausnehmens des fertigen Behälters 2 besteht die Blasform 4 aus Formhälften 5, 6 und einem Bodenteil 7, das von einer Hubvorrichtung 8 positionierbar ist. Der Vorformling 1 kann im Bereich der Blasstation 3 von einem Transportdorn 9 gehalten sein, der gemeinsam mit dem Vorformling 1 eine Mehrzahl von Behandlungsstationen innerhalb der Vorrichtung durchläuft. Es ist aber auch möglich, den Vorformling 1 beispielsweise über Zangen oder andere Handhabungsmittel direkt in die Blasform 4 einzusetzen.

Zur Ermöglichung einer Druckluftzuleitung ist unterhalb des Transportdornes 9 ein Anschlußkolben 10 angeordnet, der dem Vorformling 1 Druckluft zuführt und gleichzeitig eine Abdichtung relativ zum Transportdorn 9 vornimmt. Bei einer abgewandelten Konstruktion ist es grundsätzlich aber auch denkbar, feste Druckluftzuleitungen zu verwenden.

Eine Reckung des Vorformlings 1 erfolgt mit Hilfe einer Reckstange 11, die von einem Zylinder 12 positioniert wird. Grundsätzlich ist es aber auch denkbar, eine mechanische Positionierung der Reckstange 11 über Kurvensegmente durchzuführen, die von Abgriffrollen beaufschlagt sind. Die Verwendung von Kurvensegmenten ist insbesondere dann zweckmäßig, wenn eine Mehrzahl von Blasstationen 3 auf einem rotierenden Blasrad angeordnet ist. Eine Verwendung von Zylindern 12 ist zweckmäßig, wenn ortsfest angeordnete Blasstationen 3 vorgesehen sind.

Bei der in Fig. 1 dargestellten Ausführungsform ist das Recksystem derart ausgebildet, dass eine Tandem-Anordnung von zwei Zylindern 12 bereitgestellt ist. Von einem Primärzylinder 13 wird die Reckstange 11 zunächst vor Beginn des eigentlichen Reckvorganges bis in den Bereich eines Bodens 14 des Vorformlings 1 gefahren. Während des eigentlichen Reckvorganges wird der Primärzylinder 13 mit ausgefahrener Reckstange gemeinsam mit einem den Primärzylinder 13 tragenden Schlitten 15 von einem Sekundärzylinder 16 oder über eine Kurvensteuerung positioniert. Insbesondere ist daran gedacht, den Sekundärzylinder 16 derart kurvengesteuert einzusetzen, dass von einer Führungsrolle 17, die während der Durchführung des Reckvorganges an einer Kurvenbahn entlang gleitet, eine aktuelle Reckposition vorgegeben wird. Die Führungsrolle 17 wird vom Sekundärzylinder 16 gegen die Führungsbahn gedrückt. Der Schlitten 15 gleitet entlang von zwei Führungselementen 18.

Nach einem Schließen der im Bereich von Trägern 19, 20 angeordneten Formhälften 5, 6 erfolgt eine Verriegelung der Träger 19, 20 relativ zueinander mit Hilfe einer Verriegelungseinrichtung 40.

Zur Anpassung an unterschiedliche Formen eines Mündungsabschnittes 21 des Vorformlings 1 ist gemäß Fig. 2 die Verwendung separater Gewindeeinsätze 22 im Bereich der Blasform 4 vorgesehen.

Fig. 2 zeigt zusätzlich zum geblasenen Behälter 2 auch gestrichelt eingezeichnet den Vorformling 1 und schematisch eine sich entwickelnde Behälterblase 23.

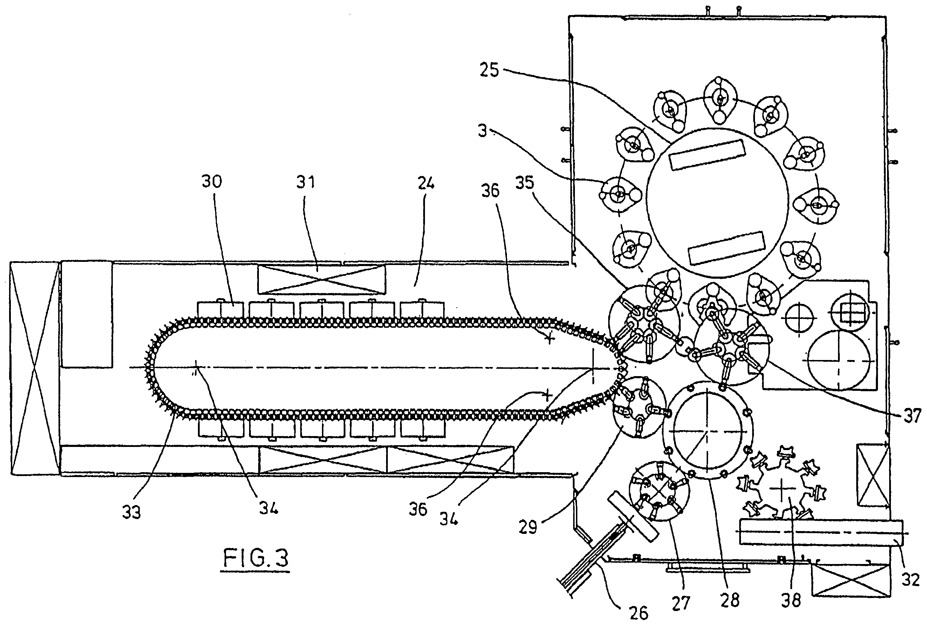

Fig. 3 zeigt den grundsätzlichen Aufbau einer Blasmaschine, die mit einer Heizstrecke 24 sowie einem rotierenden Blasrad 25 versehen ist. Ausgehend von einer Vorformlingseingabe 26 werden die Vorformlinge 1 von Übergaberädern 27, 28, 29 in den Bereich der Heizstrecke 24 transportiert. Entlang der Heizstrecke 24 sind Heizstrahler 30 sowie Gebläse 31 angeordnet, um die Vorformlinge 1 zu temperieren. Nach einer ausreichenden Temperierung der Vorformlinge 1 werden diese an das Blasrad 25 übergeben, in dessen Bereich die Blasstationen 3 angeordnet sind. Die fertig geblasenen Behälter 2 werden von weiteren Übergaberädern einer Ausgabestrecke 32 zugeführt.

Um einen Vorformling 1 derart in einen Behälter 2 umformen zu können, dass der Behälter 2 Materialeigenschaften aufweist, die eine lange Verwendungsfähigkeit von innerhalb des Behälters 2 abgefüllten Lebensmitteln, insbesondere von Getränken, gewährleisten, müssen spezielle Verfahrensschritte bei der Beheizung und Orientierung der Vorformlinge 1 eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings 1 während des Orientierungsvorganges erfolgt durch Druckluftzuführung. Die Druckluftzuführung ist in eine Vorblasphase, in der Gas, zum Beispiel Pressluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, dass bei der dargestellten Ausführungsform die Heizstrecke 24 aus einer Vielzahl umlaufender Transportelemente 33 ausgebildet ist, die kettenartig aneinandergereiht und entlang von Umlenkrädern 34 geführt sind. Insbesondere ist daran gedacht, durch die kettenartige Anordnung eine im Wesentlichen rechteckförmige Grundkontur aufzuspannen. Bei der dargestellten Ausführungsform werden im Bereich der dem Übergaberad 29 und einem Eingaberad 35 zugewandten Ausdehnung der Heizstrecke 24 ein einzelnes relativ groß dimensioniertes Umlenkrad 34 und im Bereich von benachbarten Umlenkungen zwei vergleichsweise kleiner dimensionierte Umlenkräder 36 verwendet. Grundsätzlich sind aber auch beliebige andere Führungen denkbar.

Zur Ermöglichung einer möglichst dichten Anordnung des Übergaberades 29 und des Eingaberades 35 relativ zueinander erweist sich die dargestellte Anordnung als besonders zweckmäßig, da im Bereich der entsprechenden Ausdehnung der Heizstrecke 24 drei Umlenkräder 34, 36 positioniert sind, und zwar jeweils die kleineren Umlenkräder 36 im Bereich der Überleitung zu den linearen Verläufen der Heizstrecke 24 und das größere Umlenkrad 34 im unmittelbaren Übergabebereich zum Übergaberad 29 und zum Eingaberad 35. Alternativ zur Verwendung von kettenartigen Transportelementen 33 ist es beispielsweise auch möglich, ein rotierendes Heizrad zu verwenden.

Nach einem fertigen Blasen der Behälter 2 werden diese von einem Entnahmerad 37 aus dem Bereich der Blasstationen 3 herausgeführt und über das Übergaberad 28 und ein Ausgaberad 38 zur Ausgabestrecke 32 transportiert.

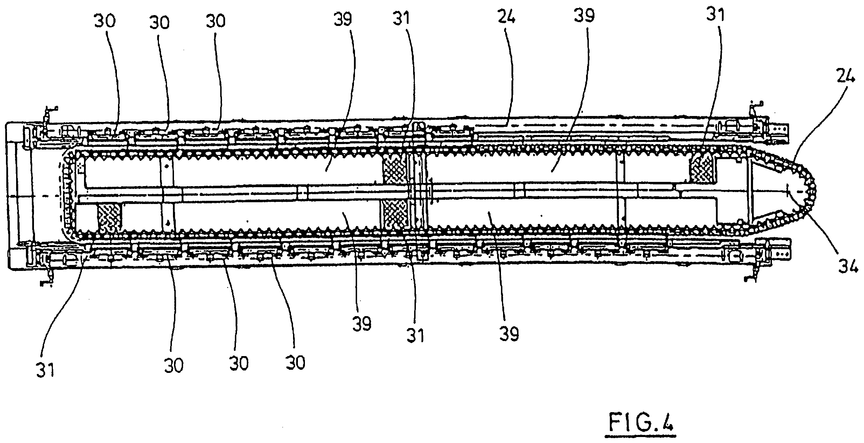

In der in Fig. 4 dargestellten modifizierten Heizstrecke 24 können durch die größere Anzahl von Heizstrahlern 30 eine größere Menge von Vorformlingen 1 je Zeiteinheit temperiert werden. Die Gebläse 31 leiten hier Kühlluft in den Bereich von Kühlluftkanälen 39 ein, die den zugeordneten Heizstrahlern 30 jeweils gegenüberliegen und über Ausströmöffnungen die Kühlluft abgeben. Durch die Anordnung der Ausströmrichtungen wird eine Strömungsrichtung für die Kühlluft im Wesentlichen quer zu einer Transportrichtung der Vorformlinge 1 realisiert. Die Kühlluftkanäle 39 können im Bereich von den Heizstrahlern 30 gegenüberliegenden Oberflächen Reflektoren für die Heizstrahlung bereitstellen, ebenfalls ist es möglich, über die abgegebene Kühlluft auch eine Kühlung der Heizstrahler 30 zu realisieren.

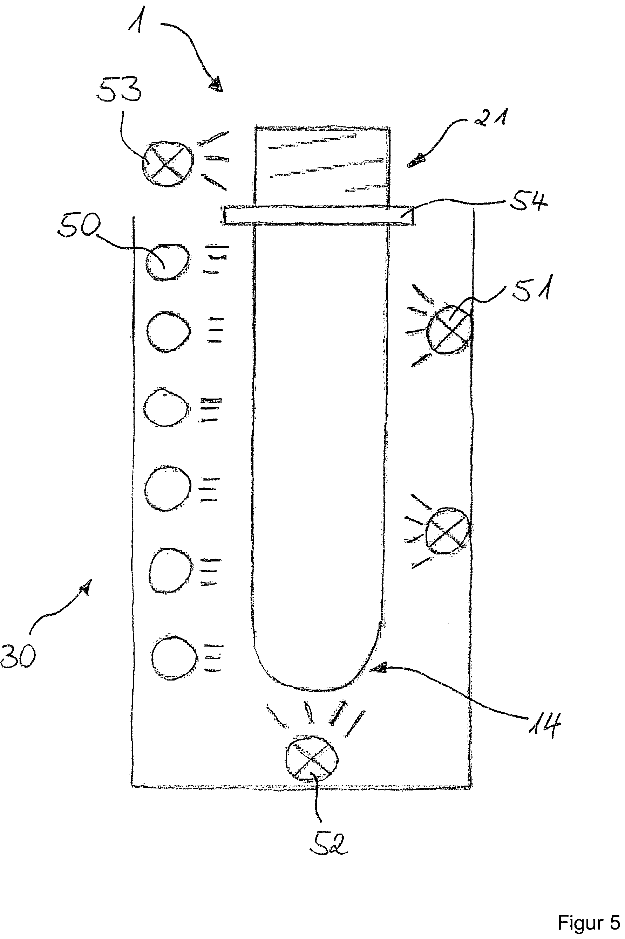

Fig. 5 zeigt in einer Schnittansicht einen Vorformling 1 beim Durchlauf durch einen Heizkasten 30. Dieser Heizkasten weist auf seiner einen Seite Infrarotstrahler 50 auf, um den Vorformling 1 mit einer Infrarotstrahlung zu beaufschlagen und auf die für die Blasformung benötigte Temperatur zu bringen. Ein Beispiel für einen solchen Heizkasten 30 zeigt z.B. die DE 10 2009 057 021 A1, die DE 10 2005 060 429 A1 oder die DE 10 2004 034 286 A1. Weiterhin sind in Fig. 5 mehrere UV-Strahler 51, 52, 53 gezeigt. Bodenseitig des Vorformlings 1 ist ein Bodenstrahler 52 angeordnet, der den geschlossenen Boden 14 des Vorformlings 1 mit UV-Strahlung beleuchtet, und auf diese Weise diesen Bodenbereich 14 sterilisiert. Gegenüberliegend zu den Infrarotstrahlern 50 sind auf unterschiedlicher Höhe des Vorformlings 1 zwei weitere UV-Strahler 51 angeordnet, die auf den Vorformling 1 ausgerichtet sind und dessen äußere Seitenwandung mit UV-Licht beaufschlagen. Es können auch mehr als zwei UV-Strahler 51 übereinander angeordnet sein, um über die gesamte Länge der Seitenwand des Vorformlings 1 eine ausreichende Ausleuchtung mit UV-Strahlung zu erreichen. Es könnte auch ein Linearstrahler vorgesehen sein, der die seitlichen UV-Strahler 51 ersetzt.

Schließlich ist oberhalb der Infrarotstrahler 50 ein UV-Strahler 53 angeordnet, der auf den Mündungsbereich 21 und hier insbesondere auf den Gewindebereich des Vorformlings 1 oberhalb des Neckrings 54 ausgerichtet ist. Aufgabe dieses UV-Strahlers 53 ist die Sterilisierung des Mündungsbereiches 21 des Vorformlings 1 von außen.

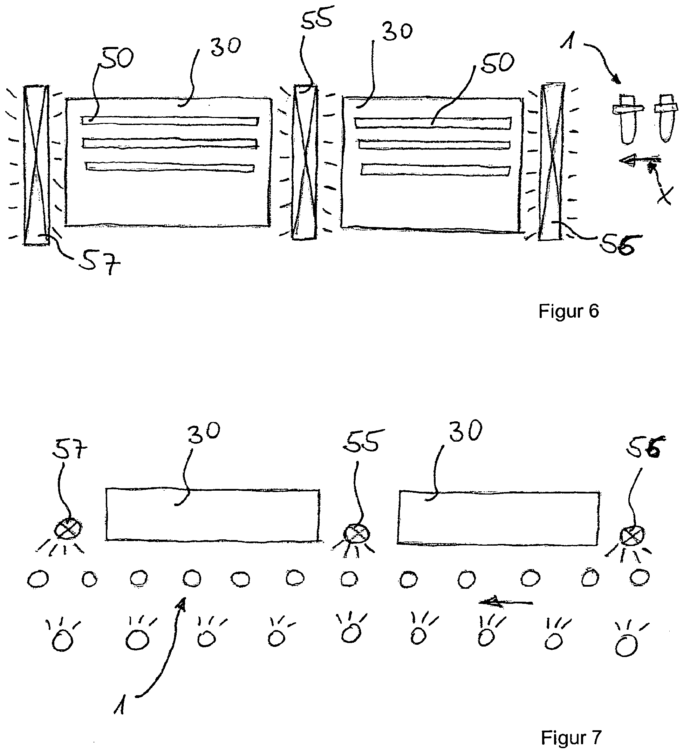

Fig. 6 zeigt in prinzipienhafter Darstellung eine Frontalansicht auf den Teilbereich einer Heizstrecke 24 (Ofen). Es sind zwei Heizkästen 30 dargestellt, zwischen denen ein erster Linienstrahler 55 für die Beleuchtung von Vorformlingen 1 mit UV-Licht angeordnet ist. Zu beiden Enden des dargestellten Ausschnittes sind weitere Linienstrahler 56, 57 dargestellt, wobei sich in der Regel diesen noch weitere, nicht dargestellte Heizkästen anschließen. Wie durch den Pfeil X dargestellt, laufen Vorformlinge 1 entlang der Anordnungskette Linienstrahler 1 (56), Heizkasten 1 (30), Linienstrahler 2 (55), Heizkasten 2 (30) und Linienstrahler 3 (57) vorbei. In der gezeigten Anordnung wird der bewegte Vorformling 1 alternierend mit UV-Licht und Infrarotlicht beaufschlagt. Das Infrarotlicht dient der Aufheizung des Vorformlings 1, während das UV-Licht der Außensterilisierung dient.

Fig. 7 zeigt in prinzipienhafter Darstellung die in Fig. 6 gezeigte Anordnung in einer Aufsicht. Wie durch Pfeil X dargestellt, werden Vorformlinge 1 an den gezeigten Heizkästen 30 und an den gezeigten UV-Strahlern 55, 56, 57 vorbeibewegt. Wie weiterhin in Fig. 7 dargestellt, können die Vorformlinge 1 von mehreren Seiten mit UV-Licht beaufschlagt werden. Dies ist insbesondere deswegen von Vorteil, um die Vorformlinge 1 möglichst lückenlos und flächendeckend über einen möglichst langen Zeitraum mit UV-Strahlung zu beleuchten. Es ist auch möglich, dass infrarotstrahlerseitig des Heizkastens 30 weitere UV-Strahler angeordnet werden, wie dies in Fig. 5 angedeutet ist.

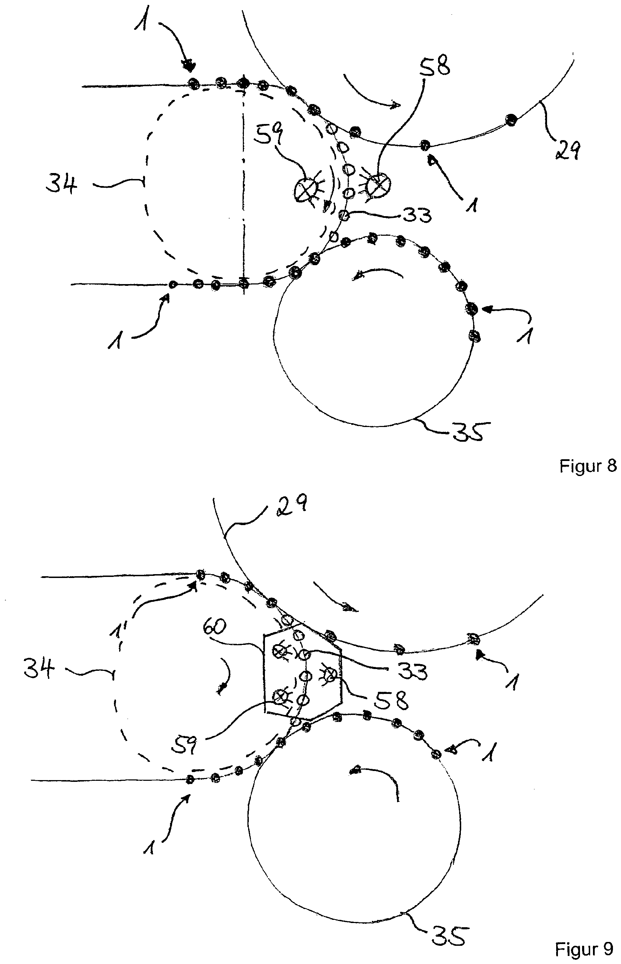

Die Fig. 8 und 9 zeigen in einer prinzipienhaften Aufsicht den Abschnitt der Heizstrecke 24, in dem sich die Vorformlinge 1 im Bereich des Kopfrades 34 bewegen und von einem Einlaufstern 35 in die Heizstrecke 24 übergeben und von der Heizstrecke 24 auf einen Auslaufstern 29 abgegeben werden. In dem dazwischen liegenden Bereich sind auf gegenüberliegenden Seiten UV-Strahler 58, 59 angeordnet. Nach Abgabe der Vorformlinge 1 auf den Ablaufstern 29 durchlaufen die Transportdorne 33 vorformlingslos diesen mit UV-Licht beaufschlagten Bereich. Die UV-Strahler 58, 59 sind dabei so angeordnet und ausgerichtet, dass sie die nunmehr frei zugänglichen Transportdorne 33 mit UV-Licht beaufschlagen. Während die Transportdorne 33 mit den Vorformlingen 1 die Heizstrecke 24 durchlaufen, werden sie in der Regel in Eigenrotation um die Vorformlingslängsachse versetzt. Bevorzugt wird diese Eigenrotation auch in dem Bereich fortgesetzt, in dem die Transportdorne 33 ohne Vorformlinge 1 vom Auslaufstern 29 zum Einlaufstern 35 um das Kopfrad 34 herumlaufen, damit die Transportdorne 33 möglichst allseitig und möglichst gleichmäßig intensiv mit UV-Strahlung beleuchtet werden.

In Fig. 9 ist gegenüber Fig. 8 dieser Übergangsbereich zwischen Auslauf- und Einlaufstern 35, 29 mittels eines Gehäuses 60 gekapselt. Innerhalb des Gehäuses 60 sind nicht dargestellte Einrichtungen vorgesehen, um Wasserstoffperoxid auf den vorformlingslosen Transportdorn 33 aufzubringen. Es kann sich bei diesen Einrichtungen z.B. um Sprühdüsen handeln, die Wasserstoffperoxid auf die Transportdorne 33 aufsprühen. Bevorzugt ist das Gehäuse 60 mit einer Absaugeinrichtung ausgestattet, die verdampftes Wasserstoffperoxid absaugt.

## Patentansprüche

1. Verfahren zur Herstellung von blasgeformten, mindestens bereichsweise sterilen Behältern (2) in einer Blasmaschine, bei dem ein Vorformling (1) aus einem thermoplastischen Material zunächst mittels einer Trageinrichtung (33) durch eine Heizeinrichtung (24) geführt und in der Heizeinrichtung (24) erwärmt wird, und dann mit einem unter Druck stehenden Fluid beaufschlagt wird, sowie bei dem der Vorformling (1) zumindest bereichsweise mit einer sterilisierenden Strahlung beaufschlagt wird, wobei wenigstens eine Strahlungsquelle (51, 53, 55, 56, 57, 58, 59) für die sterilisierende Strahlung in der Heizeinrichtung (24) stationär im Abstand zu dem Vorformling (1) angeordnet wird, wobei die Strahlungsrichtung wenigstens einer der wenigstens einen Strahlungsquelle (51, 53, 55, 56, 57, 58, 59) auf den Mündungsbereich (21) des Vorformlings (1) und/oder auf die Trageinrichtung (33) ausgerichtet ist, wobei die Heizeinrichtung (24) um Umlenkräder (34, 36) ringförmig umlaufende Trageinrichtungen (33) aufweist und Vorformlinge (1) in einem Eingabebereich in die Heizeinrichtung (24) übergeben und in einem Ausgabebereich aus der Heizeinrichtung (24) entnommen werden, wobei die umlaufenden Trageinrichtungen (33) nach der Entnahme der Vorformlinge (1) im Ausgabebereich vorformlingslos bis zum Eingabebereich um das Kopfrad (34) herum weiterlaufen, **wobei** die Heizeinrichtung (24) mehrere in Umlaufrichtung der Vorformlinge (1) hintereinander angeordnete Heizkästen (30) aufweist, wobei wenigstens eine der Strahlungsquellen (51, 53, 55, 56, 57, 58, 59) innerhalb der Heizkästen (30) angeordnet ist, **dadurch gekennzeichnet, dass** wenigstens eine der Strahlungsquellen (51, 53, 55, 56, 57, 58, 59) zwischen benachbarten Heizkästen (30) angeordnet ist.

2. Verfahren nach Anspruch 1, **dadurch gekennzeichnet, dass** wenigstens eine Strahlungsquelle (51, 53, 55, 56, 57, 58, 59) im Bereich des Kopfrades (34) angeordnet und auf die vorformlingslosen Trageinrichtungen (33), die insbesondere als Dorn (33) ausgebildet sind, ausgerichtet ist.

3. Verfahren nach einem der vorhergehenden Ansprüche, **dadurch gekennzeichnet, dass** die Strahlungsquelle (51, 53, 55, 56, 57, 58, 59) ein Linienstrahler ist, dessen Längsachse parallel zur Längserstreckung der vorbeibewegten Vorformlinge (1) ausgerichtet ist, oder mehrere Strahlungsquellen (51, 53, 55, 56, 57, 58, 59) in Richtung der Längserstreckung der vorbeibewegten Vorformlinge (1) übereinander angeordnet sind und/oder bei einem Anfahren der Heizeinrichtung (24) bzw. der Blasformungseinrichtung und/oder bei einem Inlinebetrieb der Heizeinrichtung (24) bzw. der Blasformungseinrichtung die Strahlungsquellen (51, 53, 55, 56, 57, 58, 59) für wenigstens einen Umlauf der Trageinrichtungen (33) in der Heizeinrichtung (24) weiter Strahlung abgeben und/oder in dem gehäuseumschlossenen Bereich die Trageinrichtungen (33) für wenigstens einen Umlauf weiter mit dem chemischen Sterilisiermittel beaufschlagt werden.

4. Verfahren nach Anspruch 2, **dadurch gekennzeichnet, dass** wenigstens der Bereich der Heizeinrichtung (24), in dem die Trageinrichtungen (33) vorformlingslos umlaufen, zumindest teilweise von einem mit einer Absaugung versehenen Gehäuse (60) umschlossen ist, und die Trageinrichtungen (33) innerhalb dieses Gehäuses (60) mit einem chemischen Sterilisierungsmittel, insbesondere mit Wasserstoffperoxid, beaufschlagt werden.

5. Verfahren nach einem der vorhergehenden Ansprüche, **dadurch gekennzeichnet, dass** weitere Strahlungsquellen (51, 53, 55, 56, 57, 58, 59) in der Heizeinrichtung (24) angeordnet sind, die auf den Bodenbereich (14) und/oder auf die äußeren Seitenwände des Vorformlings (1) gerichtet sind und/oder mehrere Strahlungsquellen (51, 53, 55, 56, 57, 58, 59) umfangsbeabstandet um den Vorformling (1) herum angeordnet und aus verschiedenen radialen Richtungen auf den Vorformling (1) ausgerichtet sind.

6. Verfahren nach einem der vorhergehenden Ansprüche, **dadurch gekennzeichnet, dass** die Trageinrichtung (33) ausgebildet ist, sich beim Umlauf in der Heizeinrichtung (24) zumindest bereichsweise um sich selbst zu drehen, wobei die Drehachse parallel zur Längserstreckung der Vorformlinge (1) ausgerichtet ist und/oder die Strahlungsquellen (51, 53, 55, 56, 57, 58, 59) UV-Strahler sind.

7. Blasmaschine zur Herstellung von blasgeformten, mindestens bereichsweise sterilen Behältern (2), die eine Sterilisierungseinrichtung mit wenigstens einer Strahlungsquelle zur Beaufschlagung mindestens eines Teiles eines Vorformlings (1) mit einer sterilisierenden Strahlung aufweist, sowie die mit einer Heizeinrichtung (24) zur Temperierung der Vorformlinge (1) auf eine Blasformungstemperatur und mit einer Blaseinrichtung zur Blasverformung der Vorformlinge (1) in die Behälter (2) versehen ist, wobei Trageinrichtungen (33) die Vorformlinge (1) durch die Heizeinrichtung (24) führen, wobei die Strahlungsquelle (51, 53, 55, 56, 57, 58, 59) für die sterilisierende Strahlung stationär und im Abstand zu den Vorformlingen (1) in der Heizeinrichtung (24) angeordnet ist, wobei die Strahlungsrichtung wenigstens einer der wenigstens einen Strahlungsquelle (51, 53, 55, 56, 57, 58, 59) auf den Mündungsbereich (21) des Vorformlings (1) und/oder auf die Trageinrichtung (33) ausgerichtet ist, wobei die Strahlungsquelle (51, 53, 55, 56, 57, 58, 59) insbesondere ein Linienstrahler ist, dessen Längsachse parallel zur Längserstreckung der vorbeibewegten Vorformlinge (1) ausgerichtet ist, oder mehrere Strahlungsquellen (51, 53, 55, 56, 57, 58, 59) in Richtung der Längserstreckung der vorbeibewegten Vorformlinge (1) übereinander angeordnet sind, und/oder insbesondere wobei die Strahlungsquellen (51, 53, 55, 56, 57, 58, 59) bei einem Anfahren der Heizeinrichtung (24) und/oder bei einem Inlinebetrieb der Heizeinrichtung (24) weiter Strahlung abgebend und/oder in dem gehäuseumschlossenen Bereich die Trageinrichtungen (33) weiter mit dem chemischen Sterilisiermittel beaufschlagend angesteuert sind, insbesondere für wenigstens einen Umlauf der Trageinrichtungen (33) in der Heizeinrichtung (24), wobei die Heizeinrichtung (24) um Umlenkräder (34, 36) ringförmig umlaufende Trageinrichtungen (33) aufweist und Vorformlinge (1) in einem Eingabebereich in die Heizeinrichtung (24) übergeben und in einem Ausgabebereich aus der Heizeinrichtung (24) entnommen werden, wobei die umlaufenden Trageinrichtungen (33) nach der Entnahme der Vorformlinge (1) im Ausgabebereich vorformlingslos bis zum Eingabebereich um das Kopfrad (34) herum weiterlaufen, **wobei** die Heizeinrichtung (24) mehrere in Umlaufrichtung der Vorformlinge (1) hintereinander angeordnete Heizkästen (30) aufweist, und wenigstens eine der Strahlungsquellen (51, 53, 55, 56, 57, 58, 59) innerhalb der Heizkästen (30) angeordnet ist, **dadurch gekennzeichnet, dass** wenigstens eine der Strahlungsquellen (51, 53, 55, 56, 57, 58, 59) zwischen benachbarten Heizkästen (30) angeordnet ist.

8. Blasmaschine nach Anspruch 7, **dadurch gekennzeichnet, dass** wenigstens eine Strahlungsquelle (51, 53, 55, 56, 57, 58, 59) im Bereich des Kopfrades (34) angeordnet und auf die vorformlingslosen Trageinrichtungen (33), die insbesondere als Dorn (33) ausgebildet sind, ausgerichtet ist.

9. Blasmaschine nach Anspruch 7 oder 8, **dadurch gekennzeichnet, dass** die Strahlungsquelle (51, 53, 55, 56, 57, 58, 59) ein Linienstrahler ist, dessen Längsachse parallel zur Längserstreckung der vorbeibewegten Vorformlinge (1) ausgerichtet ist, oder mehrere Strahlungsquellen (51, 53, 55, 56, 57, 58, 59) in Richtung der Längserstreckung der vorbeibewegten Vorformlinge (1) übereinander angeordnet sind, und/oder insbesondere wobei die Strahlungsquellen (51, 53, 55, 56, 57, 58, 59) bei einem Anfahren der Heizeinrichtung (24) und/oder bei einem Inlinebetrieb der Heizeinrichtung (24) weiter Strahlung abgebend und/oder in dem gehäuseumschlossenen Bereich die Trageinrichtungen (33) weiter mit dem chemischen Sterilisiermittel beaufschlagend angesteuert sind, insbesondere für wenigstens einen Umlauf der Trageinrichtungen (33) in der Heizeinrichtung (24).

10. Blasmaschine nach Anspruch 8, **dadurch gekennzeichnet, dass** wenigstens der Bereich der Heizeinrichtung (24), in dem die Trageinrichtungen (33) vorformlingslos umlaufen, zumindest teilweise von einem mit einer Absaugung versehenen Gehäuse (60) umschlossen ausgebildet ist, und in dem Gehäuse (60) die Trageinrichtungen (33) innerhalb dieses Gehäuses mit einem chemischen Sterilisierungsmittel, insbesondere mit Wasserstoffperoxid, beaufschlagende Sterilisiereinrichtungen angeordnet sind.

11. Blasmaschine nach einem der vorhergehenden Vorrichtungsansprüche 7 bis 10, **dadurch gekennzeichnet, dass** weitere Strahlungsquellen (51, 53, 55, 56, 57, 58, 59) in der Heizeinrichtung (24) angeordnet sind, die auf den Bodenbereich (14) und/oder auf die äußeren Seitenwände des Vorformlings (1) gerichtet sind und/oder mehrere Strahlungsquellen (51, 53, 55, 56, 57, 58, 59) umfangsbeabstandet um den Vorformling (1) herum angeordnet und aus verschiedenen radialen Richtungen auf den Vorformling (1) ausgerichtet sind.

12. Blasmaschine nach einem der vorhergehenden Vorrichtungsansprüche 7 bis 11, **dadurch gekennzeichnet, dass** die Trageinrichtung (33) ausgebildet ist, sich beim Umlauf in der Heizeinrichtung (24) zumindest bereichsweise um sich selbst zu drehen, wobei die Drehachse parallel zur Längserstreckung der Vorformlinge (1) ausgerichtet ist und/oder die Strahlungsquellen (51, 53, 55, 56, 57, 58, 59) als UV-Strahler ausgebildet sind.

13. Heizeinrichtung (24) für eine Blasmaschine nach Anspruch 7, wobei die Heizeinrichtung (24) eine Sterilisierungseinrichtung mit wenigstens einer Strahlungsquelle zur Beaufschlagung mindestens eines Teiles eines Vorformlings (1) mit einer sterilisierenden Strahlung aufweist, wobei die Heizeinrichtung (24) zur Temperierung der Vorformlinge (1) auf eine Blasformungstemperatur ausgeführt ist, wobei Trageinrichtungen (33) die Vorformlinge (1) durch die Heizeinrichtung (24) führen, wobei die Strahlungsquelle (51, 53, 55, 56, 57, 58, 59) für die sterilisierende Strahlung stationär und im Abstand zu den Vorformlingen (1) in der Heizeinrichtung (24) angeordnet ist, wobei die Strahlungsrichtung wenigstens einer der wenigstens einen Strahlungsquelle (51, 53, 55, 56, 57, 58, 59) auf den Mündungsbereich (21) des Vorformlings (1) und/oder auf die Trageinrichtung (33) ausgerichtet ist, wobei die Strahlungsquelle (51, 53, 55, 56, 57, 58, 59) insbesondere ein Linienstrahler ist, dessen Längsachse parallel zur Längserstreckung der vorbeibewegten Vorformlinge (1) ausgerichtet ist, oder mehrere Strahlungsquellen (51, 53, 55, 56, 57, 58, 59) in Richtung der Längserstreckung der vorbeibewegten Vorformlinge (1) übereinander angeordnet sind, und/oder insbesondere wobei die Strahlungsquellen (51, 53, 55, 56, 57, 58, 59) bei einem Anfahren der Heizeinrichtung (24) und/oder bei einem Inlinebetrieb der Heizeinrichtung (24) weiter Strahlung abgebend, insbesondere für wenigstens einen Umlauf der Trageinrichtungen (33) in der Heizeinrichtung (24), wobei die Heizeinrichtung (24) um Umlenkräder (34, 36) ringförmig umlaufende Trageinrichtungen (33) aufweist und Vorformlinge (1) in einem Eingabebereich in die Heizeinrichtung (24) übergeben und in einem Ausgabebereich aus der Heizeinrichtung (24) entnommen werden, wobei die umlaufenden Trageinrichtungen (33) nach der Entnahme der Vorformlinge (1) im Ausgabebereich vorformlingslos bis zum Eingabebereich um das Kopfrad (34) herum weiterlaufen, **wobei** die Heizeinrichtung (24) mehrere in Umlaufrichtung der Vorformlinge (1) hintereinander angeordnete Heizkästen (30) aufweist, und wenigstens eine der Strahlungsquellen (51, 53, 55, 56, 57, 58, 59) innerhalb der Heizkästen (30) angeordnet ist, **dadurch gekennzeichnet, dass** wenigstens eine der Strahlungsquellen (51, 53, 55, 56, 57, 58, 59) zwischen benachbarten Heizkästen (30) angeordnet ist.

14. Heizeinrichtung nach Anspruch 13 und mit den kennzeichnenden Merkmalen nach einem der Ansprüche 8 bis 12.

## Claims

1. A method for producing blow moulded containers (2), which are sterile at least in some regions, in a blow moulding machine, in the case of which a preform (1) of a thermoplastic material is initially guided through a heating device (24) by means of a support device (33) and is heated in the heating device (24), and a pressurized fluid is then applied thereto, and in the case of which a sterilising radiation is applied at least in some regions to the preform (1), wherein at least one radiation source (51, 53, 55, 56, 57, 58, 59) for the sterilising radiation is arranged stationarily at a distance to the preform (1) in the heating device (24), wherein the radiation direction of at least one of the at least one radiation source (51, 53, 55, 56, 57, 58, 59) is oriented towards the opening region (21) of the preform (1) and/or towards the support device (33), wherein the heating device (24) has support devices (33), which annularly revolve around deflecting wheels (34, 36), and preforms (1) are transferred into the heating device (24) in an input region and are removed from the heating device (24) in an output region, wherein, after the removal of the preforms (1), the circumferential support devices (33) continue to run in a preform-free manner around the head wheel (34) in the output region all the way to the input region, **wherein** the heating device (24) has several heating boxes (30), which are arranged one behind the other in the circumferential direction of the preforms (1), wherein at least one of the radiation sources (51, 53, 55, 56, 57, 58, 59) is arranged inside the heating boxes (30), **characterised in that** at least one of the radiation sources (51, 53, 55, 56, 57, 58, 59) is arranged between adjacent heating boxes (30).

2. The method according to Claim 1, **characterised in that** at least one radiation source (51, 53, 55, 56, 57, 58, 59) is arranged in the region of the head wheel (34) and is oriented towards the preform-free support devices (33), which are in particular formed as mandrel (33).

3. The method according to any one of the preceding claims, **characterised in that** the radiation source (51, 53, 55, 56, 57, 58, 59) is a linear radiator, the longitudinal axis of which is oriented parallel to the longitudinal extension of the preforms (1) that are moved past, or that several radiation sources (51, 53, 55, 56, 57, 58, 59) are arranged on top of one another in the direction of the longitudinal extension of the preforms (1) that are moved past, and/or that the radiation sources (51, 53, 55, 56, 57, 58, 59) further emit radiation for at least one revolution of the support devices (33) in the heating device (24) in response to a start-up of the heating device (24) or of the blow moulding device, respectively, and/or in response to an inline operation of the heating device (24) or of the blow moulding device, and/or the chemical sterilising agent is still applied to the support devices (33) in the housing-enclosed region for at least one revolution.

4. The method according Claim 2, **characterised in that** at least the region of the heating device (24), in which the support devices (33) revolve in a preform-free manner, is at least partially enclosed by a housing (60) provided with a suction, and a chemical sterilisation agent, in particular hydrogen peroxide, is applied to the support devices (33) inside said housing (60).

5. The method according to any one of the preceding claims, **characterised in that** further radiation sources (51, 53, 55, 56, 57, 58, 59) are arranged in the heating device (24) and are oriented towards the bottom region (14) and/or towards the outer side walls of the preform (1), and/or several radiation sources (51, 53, 55, 56, 57, 58, 59) are arranged at a circumferential distance around the preform (1) and are oriented towards the preform (1) from different radial directions.

6. The method according to any one of the preceding claims, **characterised in that** the support device (33) is formed to rotate around itself at least in some regions when revolving in the heating device (24), wherein the axis of rotation is oriented parallel to the longitudinal extension of the preforms (1) and/or the radiation sources (51, 53, 55, 56, 57, 58, 59) are UV radiators.

7. A blow moulding machine for producing blow moulded containers (2), which are sterile at least in some regions, having a sterilisation device comprising at least one radiation source for applying a sterilising radiation to at least a part of a preform (1), and being provided with a heating device (24) for controlling the temperature of the preforms (1) to a blow moulding temperature, and with a blowing device for blow moulding the preforms (1) into the containers (2), wherein support devices (33) guide the preforms (1) through the heating device (24), wherein the radiation source (51, 53, 55, 56, 57, 58, 59) for the sterilising radiation is arranged stationarily and at a distance to the preforms (1) in the heating device (24), wherein the radiation direction of at least one of the at least one radiation source (51, 53, 55, 56, 57, 58, 59) is oriented towards the opening region (21) of the preform (1) and/or towards the support device (33), wherein the radiation source (51, 53, 55, 56, 57, 58, 59) is in particular a linear radiator, the longitudinal axis of which is oriented parallel to the longitudinal extension of the preforms (1) that are moved past, or that several radiation sources (51, 53, 55, 56, 57, 58, 59) are arranged on top of one another in the direction of the longitudinal extension of the preforms (1) that are moved past, and/or in particular wherein the radiation sources (51, 53, 55, 56, 57, 58, 59) are controlled so as to further emit radiation in response to a start-up of the heating device (24) and/or in response to an inline operation of the heating device (24) and/or so as to further apply the chemical sterilising agent to the support devices (33) in the housing-enclosed region, in particular for at least one revolution of the support devices (33) in the heating device (24), wherein the heating device (24) has support devices (33), which annularly revolve around deflecting wheels (34, 36), and preforms (1) are transferred into the heating device (24) in an input region and are removed from the heating device (24) in an output region, wherein, after the removal of the preforms (1), the circumferential support devices (33) continue to run in a preform-free manner around the head wheel (34) in the output region all the way to the input region, **wherein** the heating device (24) has several heating boxes (30), which are arranged one behind the other in the circumferential direction of the preforms (1), and at least one of the radiation sources (51, 53, 55, 56, 57, 58, 59) is arranged inside the heating boxes (30), **characterised in that** at least one of the radiation sources (51, 53, 55, 56, 57, 58, 59) is arranged between adjacent heating boxes (30).

8. The blow moulding machine according to Claim 7, **characterised in that** at least one radiation source (51, 53, 55, 56, 57, 58, 59) is arranged in the region of the head wheel (34) and is oriented towards the preform-free support devices (33), which are in particular formed as mandrel (33).

9. The blow moulding machine according to Claim 7 or 8, **characterised in that** the radiation source (51, 53, 55, 56, 57, 58, 59) is a linear radiator, the longitudinal axis of which is oriented parallel to the longitudinal extension of the preforms (1) that are moved past, or that several radiation sources (51, 53, 55, 56, 57, 58, 59) are arranged on top of one another in the direction of the longitudinal extension of the preforms (1) that are moved past, and/or in particular wherein the radiation sources (51, 53, 55, 56, 57, 58, 59) are controlled so as to further emit radiation in response to a start-up of the heating device (24) and/or in response to an inline operation of the heating device (24) and/or so as to further apply the chemical sterilising agent to the support devices (33) in the housing-enclosed region, in particular for at least one revolution of the support devices (33) in the heating device (24).

10. The blow moulding machine according to claim 8, **characterised in that** at least the region of the heating device (24), in which the support devices (33) revolve in a preform-free manner, is formed to be at least partially enclosed by a housing (60) provided with a suction, and sterilisation devices, which apply a chemical sterilisation agent, in particular hydrogen peroxide, to the support devices (33) inside said housing, are arranged in the housing (60).

11. The blow moulding machine according to any one of the preceding device Claims 7 to 10, **characterised in that** further radiation sources (51, 53, 55, 56, 57, 58, 59) are arranged in the heating device (24) and which are directed towards the bottom region (14) and/or towards the outer side walls of the preform (1), and/or several radiation sources (51, 53, 55, 56, 57, 58, 59) are arranged at a circumferential distance around the preform (1) and are oriented towards the preform (1) from different radial directions.

12. The blow moulding machine according to any one of the preceding device Claims 7 to 11, **characterised in that** the support device (33) is formed to rotate around itself at least in some regions when revolving in the heating device (24), wherein the axis of rotation is oriented parallel to the longitudinal extension of the preforms (1) and/or the radiation sources (51, 53, 55, 56, 57, 58, 59) are formed as UV radiators.

13. A heating device (24) for a blow moulding machine according to Claim 7, wherein the heating device (24) has a sterilisation device comprising at least one radiation source for applying a sterilising radiation to at least a part of a preform (1), wherein the heating device (24) is designed for controlling the temperature of the preforms (1) to a blow moulding temperature, wherein support devices (33) guide the preforms (1) through the heating device (24), wherein the radiation source (51, 53, 55, 56, 57, 58, 59) for the sterilising radiation is arranged stationarily and at a distance to the preforms (1) in the heating device (24), wherein the radiation direction of at least one of the at least one radiation source (51, 53, 55, 56, 57, 58, 59) is oriented towards the opening region (21) of the preform (1) and/or towards the support device (33), wherein the radiation source (51, 53, 55, 56, 57, 58, 59) is in particular a linear radiator, the longitudinal axis of which is oriented parallel to the longitudinal extension of the preforms (1) that are moved past, or that several radiation sources (51, 53, 55, 56, 57, 58, 59) are arranged on top of one another in the direction of the longitudinal extension of the preforms (1) that are moved past, and/or in particular wherein the radiation sources (51, 53, 55, 56, 57, 58, 59) further emit radiation in response to a start-up of the heating device (24) and/or in response to an inline operation of the heating device (24), in particular for at least one revolution of the support devices (33) in the heating device (24), wherein the heating device (24) has support devices (33), which annularly revolve around deflecting wheels (34, 36), and preforms (1) are transferred into the heating device (24) in an input region and are removed from the heating device (24) in an output region, wherein, after the removal of the preforms (1), the circumferential support devices (33) continue to run in a preform-free manner around the head wheel (34) in the output region all the way to the input region, **wherein** the heating device (24) has several heating boxes (30), which are arranged one behind the other in the circumferential direction of the preforms (1), and at least one of the radiation sources (51, 53, 55, 56, 57, 58, 59) is arranged inside the heating boxes (30), **characterised in that** at least one of the radiation sources (51, 53, 55, 56, 57, 58, 59) is arranged between adjacent heating boxes (30).

14. The heating device according to Claim 13 and comprising the characterising features according to any one of Claims 8 to 12.

## Revendications

1. Procédé de fabrication de récipients (2) au moins partiellement stériles moulés par soufflage dans une machine de moulage par soufflage dans le cadre duquel une préforme (1) en un matériau thermoplastique est tout d'abord conduite au moyen d'un dispositif de support (33) à travers un dispositif de chauffage (24) où elle réchauffée, après quoi elle est soumise à l'action d'un fluide sous pression, et dans le cadre duquel la préforme (1) est, en partie au moins, soumise à l'action d'un rayonnement stérilisant, une source de rayonnement stérilisant (51, 53, 55, 56, 57, 58, 59) au moins étant agencée de façon stationnaire dans le dispositif de chauffage (24) à une certaine distance de la préforme (1), le rayonnement de la source de rayonnement ou de l'une au moins des sources de rayonnement (51, 53, 55, 56, 57, 58, 59) étant dirigé vers la section d'embouchure (21) de la préforme (1) et/ou vers le dispositif de support (33), le dispositif de chauffage (24) présentant des dispositifs de support (33) circulant autour de roues de renvoi (34, 36) et les préformes (1) étant introduites dans le dispositif de chauffage (24) dans une zone d'introduction et en étant retirées dans une zone de sortie, les dispositifs de support (33) continuant après le retrait des préformes (1) dans la zone de sortie à circuler sans préforme autour de la roue de tête (34) jusqu'à la zone d'introduction , le dispositif de chauffage (24) présentant plusieurs caissons chauffants (30) agencés l'un derrière l'autre dans le sens de circulation des préformes (1), l'une au moins des sources de rayonnement (51, 53, 55, 56, 57, 58, 59) étant agencée à l'intérieur des caissons chauffants (30), **caractérisé en ce que** l'une au moins des sources de rayonnement (51, 53, 55, 56, 57, 58, 59) est disposée entre des caissons chauffants (30) voisins.

2. Procédé selon la revendication 1, **caractérisé en ce qu'**une source de rayonnement (51, 53, 55, 56, 57, 58, 59) au moins est agencée dans la zone de la roue de tête (34) et orientée vers le dispositifs de support (33) sans préforme, lequel dispositif est notamment conçu sous forme de broche (33).

3. Procédé selon l'une des revendications précédentes, **caractérisé en ce que** la source de rayonnement (51, 53, 55, 56, 57, 58, 59) est un radiateur linéaire dont l'axe longitudinal est orienté parallèlement à l'extension longitudinale des préformes qui passent devant la source ou que plusieurs sources de rayonnement (51, 53, 55, 56, 57, 58, 59) sont agencées l'une au-dessus de l'autre en direction de l'extension longitudinale des préformes qui passent devant la source, et/ou qu'à l'approche du dispositif de chauffage (24) ou du dispositif de moulage par soufflage et/ou lors d'un fonctionnement en ligne du dispositif de chauffage (24) ou du dispositif de moulage par soufflage les sources de rayonnement (51, 53, 55, 56, 57, 58, 59) continuent à émettre un rayonnement pendant au moins une révolution des dispositifs de support (33) dans le dispositif de chauffage (24) et/ou que les dispositifs de support (33) continuent pendant au moins une révolution à être soumis à l'action de l'agent de stérilisation chimique dans la zone entourée d'un boîtier.

4. Procédé selon la revendication 2, **caractérisé en ce qu'**au moins la zone du dispositif de chauffage (24) dans laquelle les dispositifs de support (33) circulent sans préforme est, en partie au moins, entourée d'un boîtier (60) muni d'une aspiration et qu'à l'intérieur de ce boîtier (60) les dispositifs de support (33) sont soumis à l'action d'un agent de stérilisation chimique, notamment de l'eau oxygénée.

5. Procédé selon l'une des revendications précédentes, **caractérisé en ce que** d'autres sources de rayonnement (51, 53, 55, 56, 57, 58, 59) sont agencées dans le dispositif de chauffage (24) et dirigées vers la zone de fond (14) et/ou vers les parois latérales extérieures de la préforme (1) et/ou que plusieurs sources de rayonnement (51, 53, 55, 56, 57, 58, 59) sont agencées avec un certain espacement périphérique autour de la préforme (1) et dirigées vers celle-ci selon différentes directions radiales.

6. Procédé selon l'une des revendications précédentes, **caractérisé en ce que** le dispositif de support (33) est conçu de façon à, en partie au moins, tourner autour de lui-même lors de sa circulation dans le dispositif de chauffage (24), l'axe de rotation étant parallèle à l'extension longitudinale des préformes (1), et/ou **en ce que** les sources de rayonnement (51, 53, 55, 56, 57, 58, 59) sont des émetteurs de rayons UV.

7. Machine de moulage par soufflage pour la production de récipients (2) au moins partiellement stériles qui présente un dispositif de stérilisation avec au moins une source de rayonnement pour soumettre une partie au moins d'une préforme (1) à un rayonnement stérilisant, et qui est munie d'un dispositif de chauffage (24) pour tempérer les préformes (1) et les amener à une température de moulage par soufflage et d'un dispositif de soufflage pour la transformation par soufflage des préformes (1) en récipients (2), des dispositifs de support (33) conduisant les préformes (1) à travers le dispositif de chauffage (24), la source de rayonnement stérilisant (51, 53, 55, 56, 57, 58, 59) étant agencée de façon stationnaire dans le dispositif de chauffage (24) et à une certaine distance des préformes (1), le rayonnement de la source de rayonnement ou de l'une au moins des sources de rayonnement (51, 53, 55, 56, 57, 58, 59) étant dirigé vers la section d'embouchure (21) de la préforme (1) et/ou vers le dispositif de support (33), la source de rayonnement (51, 53, 55, 56, 57, 58, 59) étant notamment un radiateur linéaire dont l'axe longitudinal est orienté parallèlement à l'extension longitudinale des préformes (1) qui passent devant la source et/ou plusieurs sources de rayonnement (51, 53, 55, 56, 57, 58, 59) étant agencées l'une au-dessus de l'autre en direction de l'extension longitudinale des préformes (1) qui passent devant la source et/ou les commandes étant notamment telles qu'à l'approche du dispositif de chauffage (24) et/ou lors d'un fonctionnement en ligne du dispositif de chauffage (24) les sources de rayonnement (51,53, 55, 56, 57, 58, 59) continuent à émettre un rayonnement et/ou que les dispositifs de support (33) continuent à être soumis à l'action de l' agent de stérilisation chimique dans la zone entourée d'un boîtier, notamment pendant au moins une révolution des dispositifs de support (33) dans le dispositif de chauffage (24), le dispositif de chauffage (24) présentant des dispositifs de support (33) circulant autour de roues de renvoi (34, 36) et les préformes (1) étant introduites dans le dispositif de chauffage (24) dans une zone d'introduction et en étant retirées dans une zone de sortie, les dispositifs de support (33) continuant après le retrait des préformes (1) dans la zone de sortie à circuler sans préforme autour de la roue de tête (34) jusqu'à la zone d'introduction, le dispositif de chauffage (24) présentant plusieurs caissons chauffants (30) agencés l'un derrière l'autre dans le sens de circulation des préformes (1) et l'une au moins des sources de rayonnement (51, 53, 55, 56, 57, 58, 59) étant agencée à l'intérieur des caissons chauffants (30), **caractérisé en ce que** l'une au moins des sources de rayonnement (51, 53, 55, 56, 57, 58, 59) est disposée entre des caissons chauffants (30) voisins.

8. Machine de moulage par soufflage selon la revendication 7, **caractérisée en ce qu'**une source de rayonnement (51, 53, 55, 56, 57, 58, 59) au moins est agencée dans la zone de la roue de tête (34) et orientée vers le dispositifs de support (33) sans préforme, lequel dispositif est notamment conçu sous forme de broche (33).

9. Machine de moulage par soufflage selon la revendication 7 ou 8, **caractérisée en ce que** la source de rayonnement (51, 53, 55, 56, 57, 58, 59) est un radiateur linéaire dont l'axe longitudinal est orienté parallèlement à l'extension longitudinale des préformes (1) qui passent devant la source ou que plusieurs sources de rayonnement (51, 53, 55, 56, 57, 58, 59) sont agencées l'une au-dessus de l'autre en direction de l'extension longitudinale des préformes (1) qui passent devant la source, et/ou les commandes étant notamment telles qu'à l'approche du dispositif de chauffage (24) et/ou lors d'un fonctionnement en ligne du dispositif de chauffage (24) les sources de rayonnement (51, 53, 55, 56, 57, 58, 59) continuent à émettre un rayonnement et/ou que les dispositifs de support (33) continuent à être soumis à l'action de l' agent de stérilisation chimique dans la zone entourée d'un boîtier, notamment pendant au moins une révolution des dispositifs de support (33) dans le dispositif de chauffage (24).

10. Machine de moulage par soufflage selon la revendication 8, **caractérisée en ce que** au moins la zone du dispositif de chauffage (24) dans laquelle les dispositifs de support (33) circulent sans préforme est, en partie au moins, entourée d'un boîtier (60) muni d'une aspiration et qu'à l'intérieur de ce boîtier (33) sont agencés des dispositifs de stérilisation qui soumettent les dispositifs de support (60) à l'action d'un agent de stérilisation chimique, notamment de l'eau oxygénée.

11. Machine de moulage par soufflage selon l'une des revendications précédentes 7 à 10, **caractérisée en ce que** d'autres sources de rayonnement (51, 53, 55, 56, 57, 58, 59) sont agencées dans le dispositif de chauffage (24) et dirigées vers la zone de fond (14) et/ou vers les parois latérales extérieures de la préforme (1) et/ou que plusieurs sources de rayonnement (51, 53, 55, 56, 57, 58, 59) sont agencées avec un certain espacement périphérique autour de la préforme (1) et dirigées vers celle-ci selon différentes directions radiales.

12. Machine de moulage par soufflage selon l'une des revendications précédentes 7 à 11, **caractérisée en ce que** les dispositifs de support (33) sont conçus de façon à, en partie au moins, tourner autour d'eux-mêmes lors de leur circulation dans le dispositif de chauffage (24), l'axe de rotation étant parallèle à l'extension longitudinale des préformes (1), et/ou **en ce que** les sources de rayonnement (51, 53, 55, 56, 57, 58, 59) sont des émetteurs de rayons UV.

13. Dispositif de chauffage (24) pour une machine de moulage par soufflage selon la revendication 7, le dispositif de chauffage (24) présentant un dispositif de stérilisation avec au moins une source de rayonnement pour soumettre une partie au moins d'une préforme (1) à un rayonnement stérilisant, le dispositif de chauffage (24) étant conçu pour tempérer les préformes (1) et les amener à une température de moulage par soufflage, des dispositifs de support (33) conduisant les préformes (1) à travers le dispositif de chauffage (24), la source de rayonnement stérilisant (51, 53, 55, 56, 57, 58, 59) étant agencée de façon stationnaire dans le dispositif de chauffage (24) et à une certaine distance des préformes (1), le rayonnement de la source de rayonnement ou de l'une au moins des sources de rayonnement (51, 53, 55, 56, 57, 58, 59) étant dirigé vers la section d'embouchure (21) de la préforme (1) et/ou vers le dispositif de support (33), la source de rayonnement (51, 53, 55, 56, 57, 58, 59) étant notamment un radiateur linéaire dont l'axe longitudinal est orienté parallèlement à l'extension longitudinale des préformes (1) qui passent devant la source et/ou plusieurs sources de rayonnement (51, 53, 55, 56, 57, 58, 59) étant agencées l'une au-dessus de l'autre en direction de l'extension longitudinale des préformes (1) qui passent devant la source et/ou les commandes étant notamment telles qu'à l'approche du dispositif de chauffage (24) et/ou lors d'un fonctionnement en ligne du dispositif de chauffage (24) les sources de rayonnement (51, 53, 55, 56, 57, 58, 59) continuent à émettre un rayonnement, notamment pendant au moins une révolution des dispositifs de support (33) dans le dispositif de chauffage (24), le dispositif de chauffage (24) présentant des dispositifs de support (33) circulant autour de roues de renvoi (34, 36) et les préformes (1) étant introduites dans le dispositif de chauffage (24) dans une zone d'introduction et en étant retirées dans une zone de sortie, les dispositifs de support (33) continuant après le retrait des préformes (1) dans la zone de sortie à circuler sans préforme autour de la roue de tête (34) jusqu'à la zone d'introduction, le dispositif de chauffage (24) présentant plusieurs caissons chauffants (30) agencés l'un derrière l'autre dans le sens de circulation des préformes (1) et l'une au moins des sources de rayonnement (51, 53, 55, 56, 57, 58, 59) étant agencée à l'intérieur des caissons chauffants (30), **caractérisé en ce que** l'une au moins des sources de rayonnement (51, 53, 55, 56, 57, 58, 59) est disposée entre des caissons chauffants (30) voisins.

14. Dispositif de chauffage selon la revendication 13 doté des caractéristiques caractérisantes selon l'une des revendications 8 à 12.
